# EUROPÄISCHE PATENTANMELDUNG

(11) **EP 4 831 498 A1**
(43) Veröffentlichungstag der Anmeldung: **28.10.2026**
(21) Anmeldenummer: 25172138.7
(22) Anmeldetag: 24.04.2025
(51) Int. Cl.: F16B 13/06, F16B 13/12

(54) **SPREIZDÜBEL, INSBESONDERE AUS KUNSTSTOFF, FÜR VOLL- UND HOHLBAUSTOFFE**

(71) Anmelder: Mungo Befestigungstechnik AG, 4802 Strengelbach (CH)
(72) Erfinder: KUDSZUS, Rene, 4802 Strengelbach (CH); HÄNGGI, Noah, 4802 Strengelbach (CH); KLEMENCIC, Robert, 4802 Strengelbach (CH)
(74) Vertreter: Eisenführ Speiser

(57) **Zusammenfassung**

Die Erfindung bezieht sich auf einen Spreizdübel (10), insbesondere aus Kunststoff, für Voll- und Hohlbaustoffe, aufweisend einen Dübelkörper (12) mit einer Längsachse (L), der einen sich entlang eines Abschnitts seiner Längsachse (L) erstreckenden Spreizabschnitt (46) aufweist.

Der Dübelkörper (12) weist entlang wenigstens eines sich in Richtung der Längsachse (L) erstreckenden Umfangsbereichs (22, 22') zwei benachbarte Reihen (24, 24') von Schlitzen (26) auf, wobei jeder Schlitz (26) der zwei Reihen (24, 24') von Schlitzen einen ersten Schlitzabschnitt (28) aufweist, der sich im Wesentlichen in Längsrichtung des Dübelkörpers (12, 12') erstreckt, und
wobei eine Vielzahl von Schlitzen (26) an wenigstens einem Ende seines ersten Schlitzabschnitts (28) einen in Richtung der benachbarten Reihe (24, 24') unter einem Winkel im Bereich von etwa 10° bis 80° geneigt zur Längsachse (L) verlaufenden zweiten Schlitzabschnitt (30, 30') aufweist.

## Beschreibung

Die Erfindung bezieht sich auf einen Spreizdübel, insbesondere aus Kunststoff, für Voll- und Hohlbaustoffe, aufweisend einen Dübelkörper mit einer Längsachse, der einen sich entlang eines Abschnitts seiner Längsachse erstreckenden Spreizabschnitt aufweist.

Spreizdübel sind im Stand der Technik hinreichend bekannt und werden beispielsweise zur Verankerung von Befestigungsmitteln, wie beispielsweise Schrauben oder Haken, in Wänden oder Decken eines Gebäudes eingesetzt. Bekannte Spreizdübel, welche üblicherweise aus Kunststoff ausgebildet sind, weisen einen Dübelkörper mit einem sich entlang eines Abschnitts der Längsachse des Dübelkörpers erstreckenden Spreizabschnitt auf. Der Spreizabschnitt dient zur Verankerung in einem in die Wand oder Decke eingebrachten Bohrloch, wobei Wand und Decke aus Voll- und/oder Hohlbaustoffen ausgebildet sein können. Zum Aufspreizen des Spreizabschnitts am Spreizdübel werden die Befestigungsmittel selbst, wie beispielsweise Schrauben oder mit Gewinden ausgerüstete Haken, verwendet. Diese werden in eine am Spreizabschnitt innenseitig vorgesehene Aufnahme eingeführt, welche einen freien Querschnitt aufweist, der geringer ist als insbesondere ein Gewindeabschnitt des in die Aufnahme eingeführten Befestigungsmittels.

Aus EP 1 701 046 A1 ist z. B. ein solcher Spreizdübel, mittels welchem die zu erfüllende Verankerungsfunktion zufriedenstellend umsetzbar ist.

Der Erfindung lag vorliegend die Aufgabe zugrunde, einen Spreizdübel anzugeben, der sich günstig und vereinfacht bereitstellen sowie montieren lässt und mittels welchem eine mindestens gleichwertige Verankerung in einem Bohrloch erreicht ist.

Die Erfindung löst die ihr zugrundeliegende Aufgabe bei einem Spreizdübel, insbesondere aus Kunststoff, für Voll- und Hohlbaustoffe mit den Merkmalen nach Anspruch 1. Insbesondere ist vorgesehen, dass der Dübelkörper entlang wenigstens eines sich in Richtung der Längsachse erstreckenden Umfangsbereichs zwei benachbarte Reihen von Schlitzen aufweist, wobei jeder Schlitz der zwei Reihen von Schlitzen einen ersten Schlitzabschnitt aufweist, welcher sich im Wesentlichen in Längsrichtung des Dübelkörpers erstreckt , und wobei eine Vielzahl von Schlitzen an wenigstens einem Ende seines ersten Schlitzabschnitts einen in Richtung der benachbarten Reihe unter einem Winkel im Bereich von etwa 10° bis 80° geneigt zur Längsachse verlaufenden zweiten Schlitzabschnitt aufweist.

Die Erfindung verfolgt mit der erfindungsgemäßen Ausgestaltung der zwei benachbarten Reihen von Schlitzen in wenigstens einem Umfangsbereich am Dübelkörper und insbesondere beim Zusammenwirken mit einem mit dem Spreizabschnitt am Dübelkörper in Wirkverbindung bringbaren Befestigungsmittel den Ansatz, ein gleichmäßiges Aufspreizen am Spreizabschnitt des Dübels bevorzugt in alle Richtungen umzusetzen und somit eine verbesserte Verankerung des Dübels innerhalb eines Bohrlochs in einem Wand- oder Deckenabschnitt zu bewirken. Bei insbesondere aus Vollbaustoffen bestehenden Wänden oder Decken drückt der erfindungsgemäß ausgebildete Dübelkörper fest gegen die Wandung des Bohrlochs. Bei aus Hohlbaustoffen ausgebildeten Gebäudeabschnitten stellen sich die geschlitzten Umfangsbereiche des Dübelkörpers vereinfacht in die Hohlräume des Baustoffes aus, was zu einem sicheren Formschluss zwischen dem Dübelkörper und der Wandung des Bohrloches führt. Die Materialbereiche am Dübelkörper, die zwischen den zwei Reihen von Schlitzen angeordnet sind, werden beim Einführen des Befestigungsmittels in den Spreizdübel verstärkt in radialer Richtung nach außen bewegt. Vorzugsweise ist in einer Ausführung vorgesehen, dass die zwei Reihen von Schlitzen, welche räumlich insbesondere von den ersten Schlitzabschnitten begrenzt werden, sich in Umfangsrichtung gesehen, über einen Winkelbereich von etwa 40° bis 80° am Umfang des Dübelkörpers ausgebildet sind. Hierdurch wird erreicht, dass bei der Herstellung des Dübels Kunststoff oder ein anderes zur Dübel-Herstellung verwendetes Material in sämtliche Bereiche der zur Herstellung verwendeten Form fließen kann. Insoweit ergibt sich gegenüber abweichenden Geometrien ein produktionstechnischer Vorteil.

Die ersten Schlitzabschnitte können sowohl parallel zur Längsachse des Dübelkörpers verlaufen oder auch eine Wellen- oder Zackenform aufweisen, wobei diese sich ungeachtet ihrer genauen Ausgestaltung sich vorliegend im Wesentlichen in Längsrichtung des Dübelkörpers erstrecken. Die zweiten Schlitzabschnitte verlaufen bevorzugt in einem Winkel im Bereich von etwa 10° bis 80° geneigt zur Längsachse am Dübelkörper in Richtung der jeweils benachbarten Reihe von Schlitzen.

Gemäß einer bevorzugten Ausgestaltung weisen mehrere der Schlitze der benachbarten Reihen an beiden Enden des ersten Schlitzabschnitts zwei unter einem Winkel zur Längsachse geneigt verlaufende zweite Schlitzabschnitte auf. Damit ist das Aufspreizen des die Reihen von Schlitzen umfassenden Umfangsbereichs und ferner des gesamten Dübelkörpers weiter verbessert. Mittels der zweiten Schlitzabschnitte an beiden Enden ist insbesondere die Verformungsfähigkeit des Spreizabschnitts weiter erhöht und damit das Ausstellen der zwischen den zwei Reihen von Schlitzen angeordneten Materialbereiche nach außen begünstigt.

In einer bevorzugten Ausgestaltung ist vorgesehen, dass die zweiten Schlitzabschnitte zum ersten Schlitzabschnitt einen Innenwinkel im Bereich von etwa 100° bis 170° aufweisen. Zwischen den zwei Reihen von Schlitzen verläuft ein von dem restlichen Dübelkörper durch die Schlitze zumindest teilweise separierter Materialstreifen, der mehrere untereinander verbundene Abschnitte mit einem sich um die Längsachse hin- und her wechselnden vorgegebene Winkelverlauf aufweist.

In einer bevorzugten Ausgestaltung des Spreizdübels ist mittels der in einem Winkel zur Längsachse geneigt verlaufenden zweiten Schlitzabschnitte zweier benachbarter Reihen von Schlitzen eine ineinandergreifende Verzahnung ausgebildet. Vorzugsweise sind die zweiten, geneigt zur Längsachse des Dübelkörpers verlaufenden Schlitzabschnitte der einen Reihe mit den zweiten, geneigt zur Längsachse des Dübelkörpers verlaufenden Schlitzabschnitten der anderen Reihe ineinander verschränkt ausgebildet. Mit der verschränkten Anordnung der Schlitze sind an dem zwischen den Reihen von Schlitzen angeordneten Materialstreifen Laschen erzeugt, die sich beim Zusammenwirken des Dübels mit einem Befestigungsmittel kontrolliert in radialer Richtung nach außen ausstellen. In einer möglichen Ausgestaltung verlaufen die zweiten, geneigt zur Längsachse ausgerichteten und somit insbesondere schräg zur Längsachse verlaufenden, Schlitzabschnitte an entgegengesetzten Enden zweier einander gegenüberstehender Schlitze der benachbarten Reihen etwa parallel zueinander.

In einer bevorzugten Ausführung ist vorgesehen, dass die ersten, im Wesentlichen in Längsrichtung des Dübelkörpers verlaufenden Schlitzabschnitte der beiden Reihen in Längsrichtung versetzt zueinander angeordnet sind. Ein zwischen zwei benachbarten Schlitzen einer Reihe vorhandener Materialsteg wird, in Umfangsrichtung gesehen, von einem ersten Schlitzabschnitt der benachbarten Reihe überdeckt, sodass über nahezu die gesamte Länge des Dübelkörpers keine Lücke der Schlitze zueinander auftritt. Einander zugeordnete, an zumindest einem, vorzugsweise beiden Enden der ersten Schlitzabschnitte ausgebildete zweite und geneigt zur Längsachse des Dübelkörpers verlaufenden Schlitzabschnitte beider Reihen definieren jeweils zwischen sich einen Abschnitt des Materialstreifens mit im Wesentlichen parallel zueinander verlaufenden Seitenkanten.

Eine mögliche Weiterbildung der Erfindung sieht vor, dass zwei benachbarte Reihen von Schlitzen auf jeweils zwei voneinander abgewandten Umfangsbereichen des Dübelkörpers angeordnet sind. Insbesondere sind die mit den Schlitzen ausgerüsteten Umfangsbereiche einander diametral gegenüberliegend ausgebildet. Damit ist das Spreizverhalten des erfindungsgemäßen Spreizdübels über seinen gesamten Umfang vergleichmäßigt. Mit den zwei nahezu identisch ausgeführten Umfangsbereichen mit ihren jeweils zwei Reihen von Schlitzen ist ein optimales Spreizen des Dübelkörpers in alle Richtungen bewirkt. Durch das gleichmäßige Aufspreizen ist zudem eine vorzugsweise feste Verankerung des Dübels in einem Bohrloch in einem Baustoff, unabhängig von dessen Ausgestaltung als Voll- oder Hohlbaustoff, gewährleistet. In einer möglichen Ausgestaltung der Erfindung können an einem erfindungsgemäßen Spreizdübel auch drei oder vier solcher mit Reihen von Schlitzen ausgerüsteten Umfangsbereiche vorgesehen sein.

Gemäß einer bevorzugten Ausführung weist der Dübelkörper ein vorderes Einsteckende und ein entgegengesetzt angeordnetes hinteres Ende auf, wobei vorzugsweise das Einsteckende keilförmig ausgebildet und am hinteren Ende ein Dübelflansch vorgesehen ist. Mit dem Einsteckende, das ein Teilstück des Spreizabschnitts am Dübelkörper ausbildet und gegenüber einem mittleren Abschnitt des Spreizabschnitts im Außenumfang verringert ausgebildet ist, ist das Einführen des Spreizdübels in ein Bohrloch in einer Wand oder Decke eines Gebäudes vereinfacht. Am hinteren Ende des Dübelkörpers ist ein Dübelflansch ausgebildet, der gegenüber einem Außenumfang im mittleren Abschnitt des Spreizkörpers vergrößert ist. Damit ist bewirkt, dass der Spreizdübel beim Einsetzen in das Bohrloch, insbesondere beim Einschlagen in ein Bohrloch, nicht zu weit in das Bohrloch hineingleiten kann. Der Dübelflansch ist als eine Art keilförmige oder kragenförmige Verdickung am hinteren Ende des Spreizdübels ausgebildet.

Vorzugsweise sind am Einsteckende an jeweils beiden, die zwei Reihen von Schlitzen definierenden Umfangsbereichen zwei am Einsteckende auslaufende erste Schlitzabschnitte ausgebildet. Mithilfe der jeweils zwei diametral am Einsteckende angeordneten ersten, sich vorzugsweise parallel zur Längsachse des Dübelkörpers erstreckenden Schlitzabschnitte ist das Einsteckende in insbesondere vier Spreizschenkel unterteilt. Vorzugsweise sind am Einsteckende über den Umfang verteilt zusätzlich Vertiefungen bzw. Kerben ausgebildet, welche sich bei Verwendung des Spreizdübels, insbesondere beim Zusammenwirken mit einem darin eingeführten Befestigungsmittel, wie beispielsweise einer Schraube, verstärkt gegen die Wandung eines den Spreizdübel aufnehmenden Bohrlochs legen. Damit ist einer möglichen Relativbewegung des Spreizdübels innerhalb des Bohrlochs entgegengewirkt. Vorzugsweise sind durch die vier am Einsteckende auslaufenden, ersten Schlitzabschnitte unterschiedlich große Spreizschenkel ausgebildet. Die von zwei ersten Schlitzabschnitten der benachbarten Reihen von Schlitzen seitlich begrenzten Spreizschenkel sind in Umfangsrichtung gesehen kleiner als die Spreizschenkel, welche von zwei ersten Schlitzabschnitten der Reihen von Schlitzen entgegengesetzter Umfangsbereichen seitlich begrenzt werden.

Eine bevorzugte Weiterbildung des Spreizdübels sieht vor, dass der Dübelkörper an seinem hinteren Ende einen Einführabschnitt für ein mit dem Spreizdübel in Wirkverbindung bringbares Befestigungsmittel aufweist, wobei der Spreizabschnitt sich vorzugsweise unmittelbar an den Einführabschnitt anschließt. Mittels des Einführabschnitts ist das Einführen des mit dem Spreizdübel in Kontakt bringbaren Befestigungsmittels vereinfacht. Der Einführabschnitt weist im Vergleich zum Spreizabschnitt einen deutlich größeren freien Innenquerschnitt auf, der in etwa dem Durchmesser des mit dem Spreizdübel zusammenwirkenden Befestigungsmittels entspricht. Zudem ist über den Einführabschnitt erreicht, dass das Befestigungsmittel, obwohl dieses bereits mit dem Spreizdübel in Kontakt gebracht ist, bei Einsetzen des Dübels in das Bohrloch keine ungewollte Spreizwirkung am Dübelkörper erzeugt. Damit ist das Einsetzen des Spreizdübels in ein Bohrloch eines Wand- oder Deckenabschnitts auch mit bereits daran angesetztem Befestigungsmittel möglich.

Vorzugsweise weist der Einführabschnitt eine im Wesentlichen zylindrische Querschnittsfläche auf, wobei am Einführabschnitt eine Einschlagsicherung für ein mit dem Dübelkörper in Wirkverbindung bringbares Befestigungsmittel vorgesehen ist. Der zylindrische Querschnitt des Einführabschnitts weist in etwa die Größe des Querschnitts des damit in Kontakt bringbaren Befestigungsmittels auf. Mit der insbesondere an der Innenwandung des Einführabschnitts ausgebildeten Einschlagsicherung ist bewirkt, dass der Spreizdübel unter Verwendung des Befestigungsmittels in ein Bohrloch eines Wand- oder Deckenabschnitts eingebracht, insbesondere eingeschlagen, werden kann. Die Einschlagsicherung wirkt einem unerwünschten verfrühten Übergang des Befestigungsmittels in den sich an den Einführabschnitt anschließenden Spreizabschnitt des Dübelkörpers entgegen. Ferner verhindert die Einschlagsicherung ein ungewolltes Trennen von Spreizdübel und Befestigungsmittel voneinander.

In einer bevorzugten Ausgestaltung des erfindungsgemäßen Spreizdübels ist die Einschlagsicherung mittels mindestens zweier auf einander gegenüberliegenden Innenwandbereichen des Einführabschnitts angeordneter Gewindeteilstücke ausgebildet. Mit dem Ausbilden von Gewindeteilstücken ist eine konstruktiv einfache Ausgestaltung zur Ausbildung einer Einschlagsicherung am Spreizdübel bewirkt. Die Gewindeteilstücke stehen vorzugsweise an der Innenwandung des Einführabschnitts vor und mit der äußeren Umfangsfläche, insbesondere einem Gewinde, des mit dem Dübelkörper in Wirkverbindung bringbaren Befestigungsmittels in Anlage. Vorzugsweise ist zwischen den Gewindeteilstücken und dem Befestigungsmittel eine Formschlussverbindung ausgebildet. Damit ist einem unerwünschten Abgleiten des Befestigungsmittels in Richtung des Spreizabschnitts am Dübelkörper beim Einschlagen des Spreizdübels in das Bohrloch entgegengewirkt.

Eine mögliche Weiterbildung des erfindungsgemäßen Spreizdübels sieht vor, dass der Dübelkörper im Bereich der an den Innenwandbereichen vorgesehenen Einschlagsicherung einen den Dübelkörper vollständig durchdringenden Materialdurchbruch aufweist. Mithilfe des von der Außenseite bis auf die Innenseite des Dübelkörpers reichenden Materialdurchbruchs ist insbesondere das Ausbilden der an der Innenwandung des Einführabschnitts vorstehenden Einschlagsicherung, insbesondere der Gewindeteilstücke, auf vereinfachte Weise von der Außenseite des Dübelkörpers ermöglicht. Mit dem Ausbilden der Einschlagsicherung von der Außenseite des Dübelkörpers aus ist, insbesondere bei der Herstellung des Dübelkörpers und einem dabei eingesetzten den inneren freien Querschnitt des Dübelkörpers definierenden Kerns, das Ausbilden einer mit dem Kern zusammenwirkenden Hinterschneidung am Einführabschnitt vermieden.

Gemäß einer bevorzugten Weiterbildung weist der Spreizabschnitt eine gegenüber dem Einführabschnitt verringerte freie Querschnittsfläche auf, welche vorzugsweise H-förmig oder X-förmig mit zwei etwa parallel zur Längsachse verlaufenden Eingriffsrippen ausgebildet ist. Mit der sich gegenüber dem Einführabschnitt verringernden, freien Querschnittsfläche am Spreizabschnitt ist mit Einführen des Befestigungsmittels in den Spreizabschnitt das radiale Aufweiten und damit das Aufspreizen des Spreizabschnitts am Dübelkörper verwirklicht. Mit der etwa H- oder X-förmig ausgebildeten freien Querschnittsfläche ist ein sicheres Zusammenwirken zwischen der Außenseite des Befestigungsmittels und dem freien Querschnitt des Spreizabschnitts bewirkt. Der Eingriff zwischen dem Befestigungsmittel und dem H- oder X-förmigen freien Querschnitt am Spreizabschnitt ist durch die in Längsrichtung des Dübelkörpers verlaufenden Eingriffsrippen weiter verbessert. Mittels der Eingriffsrippen, die als Stege mit einem etwa rechteckigem, dreieckigem oder halbrundem Querschnitt an der Innenseite des Spreizabschnitts vorstehen, ist ein sicherer Gewindeeinschnitt eines als Schraube ausgebildeten Befestigungsmittels erzielt.

In einer bevorzugten Ausgestaltung ist an der äußeren Umfangsfläche des Dübelkörpers in mindestens einem der mit den Schlitzen ausgerüsteten Umfangsbereiche benachbart zu dessen hinteren Ende eine nach außen vorstehende Materialverdickung vorgesehen. Eine derartige Materialverdickung an insbesondere einer ersten Lasche an dem durch die zwei Reihen von Schlitzen definierten Umfangsbereich sorgt für eine Vorspannung des Dübelkörpers im Bohrloch. Durch die erzeugte Vorspannung ist das Mitdrehen des Spreizdübels im Bohrloch, insbesondere zu Beginn des Ineingriffbringens des Befestigungsmittels mit dem Dübel, behindert. Vorzugsweise ist an beiden durch die Reihen von Schlitzen definierten Umfangsbereichen am hinteren Ende je eine solche Materialverdickung ausgebildet. Die Materialverdickungen stehen sich insbesondere diametral einander gegenüber.

Eine Weiterbildung des Spreizdübels sieht vor, dass die Materialverdickung als eine in Umfangsrichtung sich allmählich in radialer Richtung aufweitende Auflaufschräge ausgebildet ist, wobei die Materialverdickung an einem im Dübelkörper ausgebildeten Schlitz endet. Die Materialverdickung weist somit eine Art Keilfläche auf, welche sich insbesondere im Uhrzeigersinn in radialer Richtung aufweitet. Die Materialverdickung, welche zwischen den beiden Reihen von Schlitzen ausgebildet ist, endet vorzugsweise an einer einen Schlitz im Dübelkörper definierenden Schlitzkante, wobei die Schlitzkante des Schlitzes durch eine etwa in radialer Richtung verlaufende Anschlagfläche der Materialverdickung verlängert wird. Um das Einführen eines mit einer solchen Materialverdickung ausgerüsteten Spreizdübels in ein Bohrloch zu vereinfachen, weist die Materialverdickung eine ihr vorgelagerte in Längsrichtung keilförmig ausgebildete Abgleitfläche auf.

Vorzugsweise weist in einer möglichen Ausgestaltung der Dübelkörper zwischen den zwei Umfangsbereichen mit ihren Reihen von Schlitzen mindestens einen an seiner äußeren Umfangsfläche vorstehenden Materialsteg auf, der vorzugsweise parallel zur Längsachse verläuft. Mit den an der äußeren Umfangsfläche nach außen vorstehenden Materialstegen ist insbesondere beim Einführen des Spreizdübels in ein Bohrloch in eine Wand und/oder Decke eines Gebäudes die Vorspannung des Dübels im Bohrloch weiter erhöht. Dadurch ist der Kraft- bzw. Formschluss zwischen dem Spreizdübel und dem damit zusammenwirkenden Baustoff weiter verbessert. Vorzugsweise ist an der äußeren Umfangsfläche genau zwischen den beiden durch die Reihen von Schlitzen definierten Umfangsbereiche jeweils mindestens ein in Richtung der Längsachse verlaufender Materialsteg ausgebildet. Vorzugsweise sind mehrere solcher sich entlang eines Abschnitts an der äußeren Umfangsfläche des Dübelkörpers erstreckende und in einer Flucht hintereinander angeordnete Materialstege angeordnet.

In einer möglichen Weiterbildung des Spreizdübels weist der Dübelkörper auf seiner äußeren Umfangsfläche eine strukturierte Oberfläche auf, insbesondere eine im Wesentlichen gleichmäßig strukturierte, gewellte Oberfläche. Mit der strukturierten Oberfläche ist insbesondere in hammergebohrten Bohrlöchern, und damit insbesondere gegenüber einer aus einem Vollbaustoff bestehenden Wand und/oder Decke, eine größtmögliche Reibung zwischen der äußeren Umfangsfläche des Dübelkörpers und der Wandung des Bohrlochs bewirkt. Damit ist der Halt bzw. die Verankerung eines derart erfindungsgemäß ausgebildeten Spreizdübels im Bohrloch weiter verbessert. Vorzugsweise ist die äußere Umfangsfläche des Dübelkörpers mindestens abschnittsweise strukturiert ausgebildet, insbesondere vollständig strukturiert ausgebildet. In einer möglichen Ausgestaltung ist die Oberfläche des Dübelkörpers gleichmäßig strukturiert, insbesondere gleichmäßig gewellt ausgebildet.

Die Erfindung wird im Folgenden anhand eines bevorzugten Ausführungsbeispiels unter Bezugnahme auf die beigefügten Figuren näher beschrieben. Hierbei zeigen:
- Fig. 1 und 2:: perspektivische Ansichten einer ersten Ausführung eines erfindungsgemäßen Spreizdübels;
- Fig. 3 und 4:: eine Vorderansicht und eine Draufsicht auf den erfindungsgemäßen Spreizdübel;
- Fig. 5 und 6:: Schnittdarstellungen des erfindungsgemäßen Spreizdübels;
- Fig. 7:: eine Seitenansicht des Spreizdübels von seinem Einsteckende aus
- Fig. 8:: eine perspektivische Ansicht einer zweiten Ausführung eines erfindungsgemäßen Spreizdübels, und
- Fig. 9 und 10:: Schnittdarstellungen des erfindungsgemäßen Spreizdübels nach Fig.8.

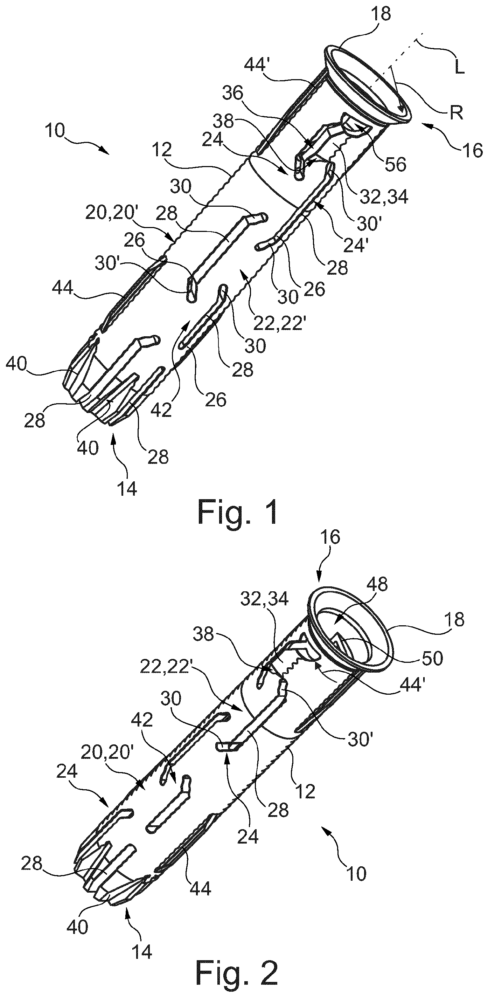

Die Fig. 1 und 2 zeigen einen insbesondere aus Kunststoff ausgebildeten Spreizdübel 10 für Voll- und Hohlbaustoffe, der einen Dübelkörper 12 mit einer Längsachse L aufweist. Der Dübelkörper 12 umfasst ein Einsteckende 14 und ein entgegengesetzt angeordnetes hinteres Ende 16. Das Einsteckende 14 ist in der vorliegenden Ausführung keilförmig ausgebildet. Am hinteren Ende 16 ist ein Dübelflansch 18 angeordnet bzw. ausgebildet.

Der Dübelkörper 12 weist, wie in den Fig. 1 und 2 angedeutet, an seiner äußeren Umfangsfläche 20 eine strukturierte Oberfläche auf. In der vorliegend gezeigten Ausführung ist die äußere Umfangsfläche 20 im Wesentlichen gleichmäßig strukturiert bzw. weist der Dübelkörper 12 eine gleichmäßig gewellte äußere Oberfläche 20' auf. Die an der Oberfläche 20' ausgebildeten Strukturierungen können jedoch nahezu jede beliebige Form haben.

Wie Fig. 1 und 2 ferner zeigen, weist der Dübelkörper 12 entlang wenigstens eines sich in Richtung der Längsachse L erstreckenden Umfangsbereichs 22, 22' zwei benachbarte Reihen 24, 24' von Schlitzen 26 auf. Vorliegend weist jeder Schlitz 26 der zwei Reihen 24, 24' von Schlitzen einen ersten Schlitzabschnitt 28 auf, der sich im Wesentlichen in Längsrichtung des Dübelkörpers 12 erstreckt, in der vorliegenden Ausführung parallel zur Längsachse L verläuft. Ferner weisen eine Vielzahl von Schlitzen 26 an wenigstens einem Ende seines ersten Schlitzabschnitts 28 einen in Richtung der benachbarten Reihe 24, 24' unter einem Winkel im Bereich von etwa 10° bis 80° geneigt zur Längsachse verlaufenden zweiten Schlitzabschnitt 30, 30' auf.

Wie die Fig. 1 bis 3 verdeutlichen, weisen mehrere der Schlitze 26 der benachbarten Reihen 24, 24' an beiden Enden des ersten Schlitzabschnitts 28 zwei unter einem Winkel geneigt zur Längsachse L verlaufende zweite Schlitzabschnitte 30, 30' auf.

Ferner ist an der äußeren Umfangsfläche 20 des Dübelkörpers 12 im Umfangsbereich 22 mit seinen Schlitzen 26 benachbart zum hinteren Ende 16 des Dübelkörpers 12 eine nach außen vorstehende Materialverdickung 32 ausgebildet. Die Materialverdickung 32 ist als eine in Umfangsrichtung U sich allmählich in radialer Richtung R aufweitende Auflaufschräge 34 ausgebildet. Die Materialverdickung 32 endet insbesondere an einem im Dübelkörper 12 ausgebildeten Schlitz 26 und weist insbesondere eine etwa senkrecht an der Umfangsfläche 20 vorstehende Anschlagfläche 36 auf.

In einer Ausführung ist der als Auflaufschräge 34 ausgebildeten Materialverdickung 32 in Längsrichtung des Dübelkörpers eine Abgleitfläche 38 vorgelagert, mittels derer das Einschieben des Dübelkörpers in ein nicht näher gezeigtes Bohrloch in einer Wand und/oder Decke erleichtert ist. Ferner sind am Einsteckende 14 mehrere über den Umfang des Dübelkörpers 12 etwa gleichmäßig verteilt angeordnete keilförmige Vertiefungen 40 ausgebildet.

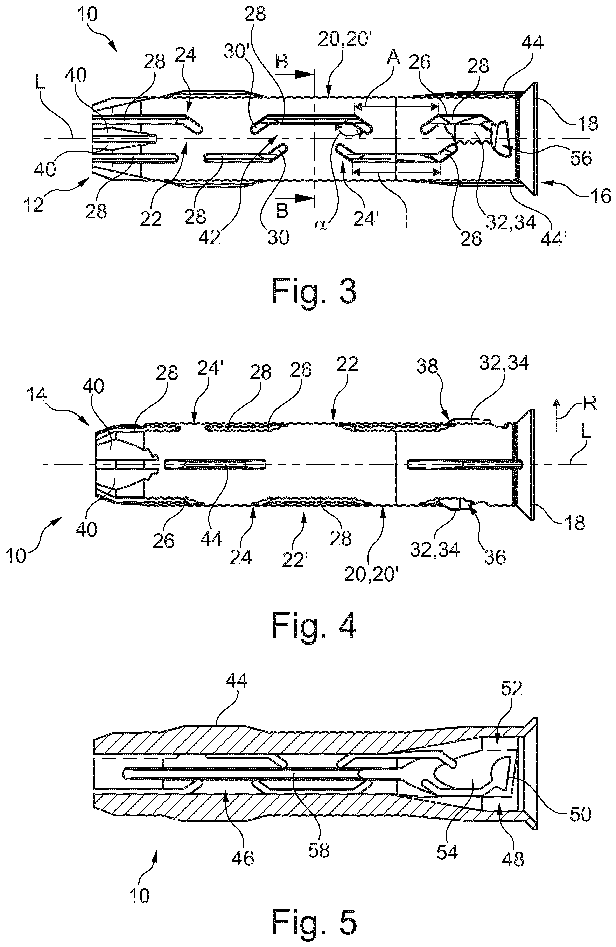

Aus Fig. 3 ist ferner ersichtlich, dass die ersten, im Wesentlichen in Längsrichtung des Dübelkörpers 12 verlaufenden Schlitzabschnitte 28 der beiden Reihen 24, 24' in Längsrichtung versetzt zueinander angeordnet sind. In einer möglichen Ausgestaltung haben die Schlitze 26 der benachbarten Reihen 24, 24' eine Länge l, welche größer ist als der Abstand A zwischen zwei Schlitzen 26 der jeweils anderen Reihe 24, 24' von Schlitzen 26. In einer bevorzugten Ausführung weisen die ersten Schlitzabschnitte 28 der Schlitze 26 der benachbarten Reihen 24, 24' eine Länge I auf, welche größer ist als der Abstand A zwischen zwei benachbarten ersten Schlitzabschnitten 28 der jeweils benachbart dazu angeordneten, weiteren Reihe 24, 24'. Somit überdecken sich in Umfangsrichtung U die Schlitze 26 gegeneinander bzw. die ersten Schlitzabschnitte 28 im Wesentlichen nahezu spaltlos gegeneinander.

In der vorliegend gezeigten Ausführung ist mittels der in einem Winkel zur Längsachse L geneigt verlaufenden, zweiten Schlitzabschnitte 30, 30' zweier benachbarter Reihen 24, 24' von Schlitzen eine ineinandergreifende Verzahnung ausgebildet. Insbesondere sind die zweiten, geneigt zur Längsachse ausgerichteten Schlitzabschnitte 30, 30' an entgegengesetzten Enden zweier einander gegenüberstehender Schlitze 26 zueinander verschränkt. Insbesondere verlaufen die einander gegenüberstehenden, zweiten Schlitzabschnitte 30, 30' parallel zueinander.

Durch die Verzahnung bzw. das Verschränken der Schlitze 26 mit ihren zweiten Schlitzabschnitten 30, 30' untereinander ist zwischen den beiden Reihen 24, 24' ein Materialstreifen 42 mit einem um feste Winkelabschnitte versetzten Verlauf ausgebildet.

Wie ferner aus Fig. 3 zu entnehmen ist, nehmen die zweiten Schlitzabschnitte 30, 30' zu den jeweils zugeordneten ersten Schlitzabschnitten 28 einen Innenwinkel α im Bereich von etwa 100° bis 170° ein.

Fig. 4 verdeutlicht in Verbindung mit den Fig. 1 und 2, dass zwei benachbarte Reihen 24, 24' von Schlitzen 26 auf jeweils zwei voneinander abgewandten Umfangsbereichen 22, 22' des Dübelkörpers 12 angeordnet bzw. ausgebildet sind. Die Umfangsbereiche 22, 22' liegen in der vorliegend gezeigten Ausführung diametral einander gegenüber. In einer nicht näher gezeigten Ausgestaltung können beispielsweise auch drei solcher Umfangsbereiche 22, 22' vorgesehen sein, die dann in einem Winkel von 120° um die Längsachse L herum an der äußeren Umfangsfläche 20 des Dübelkörpers 12 ausgebildet sind.

Wie ferner aus Fig. 3 und 4 ersichtlich, weist der Dübelkörper 12 zwischen den zwei Umfangsbereichen 22, 22' mit ihren Reihen 24, 24' von Schlitzen 26 mindestens einen an seiner äußeren Umfangsfläche 20 vorstehenden Materialsteg 44, 44' auf. Der Materialsteg 44, 44' verläuft insbesondere parallel zur Längsachse L des Dübelkörpers 12 und erhöht insbesondere mit Einsetzen des Spreizdübels 10 in ein Bohrloch die auf die äußere Umfangsfläche 20 einwirkende Vorspannung.

Fig. 5 zeigt einen Längsschnitt entlang der Schnittebene C-C in Fig. 4, aus der ersichtlich ist, dass der Dübelkörper 12 einen sich vom Einsteckende 14 in Richtung des hinteren Endes 16 entlang eines Abschnitts der Längsachse L erstreckenden Spreizabschnitt 46 und einen sich an den Spreizabschnitt 46 bis zum hinteren Ende 16 erstreckenden Einführabschnitt 48 aufweist. Der Einführabschnitt 48 ist insbesondere dazu eingerichtet, ein mit dem Spreizdübel 10 in Wirkverbindung bringbares, nicht näher gezeigtes Befestigungsmittel vor dem Einsetzen des Spreizdübels in ein Bohrloch aufzunehmen. Der Einführabschnitt 48 weist, wie in Verbindung mit Fig. 2 ersichtlich, eine im Wesentlichen zylindrische Querschnittsfläche auf, wobei am Einführabschnitt 48 eine Einschlagsicherung 50 für das in den Einführabschnitt 48 einzusetzende Befestigungsmittel vorgesehen ist.

In der vorliegend gezeigten Ausführung ist die Einschlagsicherung 50 mittels mindestens zweier auf einander gegenüberliegenden Innenwandbereichen 52 des Einführabschnitts 48 angeordneter Gewindeteilstücke 54 ausgebildet. Zudem weist der Dübelkörper 12 im Bereich seiner Einschlagsicherung 50 einen sich von der äußeren Umfangsfläche 20 in Richtung des freien inneren Querschnitts am Einführabschnitt 48 erstreckenden Materialdurchbruch 56 auf. Über den Materialdurchbruch 56 erfolgt insbesondere das Anformen der Einschlagsicherung 50 auf dem Innenwandbereich 50 des Einführabschnitts 48.

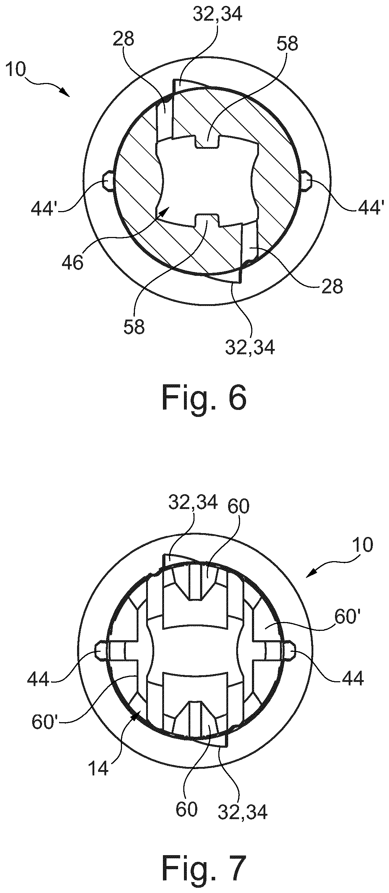

Wie den Fig. 5 und 6 zu entnehmen ist, weist der Spreizabschnitt 46 eine gegenüber dem Einführabschnitt 48 verringerte freie Querschnittsfläche auf. Der Spreizabschnitt 46 weist in der gezeigten Ausführung einen H-förmigen Querschnitt mit zwei etwa parallel zur Längsachse L verlaufenden Eingriffsrippen 58 auf. Die Eingriffsrippen 58 sind einander gegenüberliegend angeordnet. In einer Ausführung kann der Spreizabschnitt X-förmig ausgebildet und mehr als zwei Eingriffsrippen 58 aufweisen. Etwa rechtwinklig zu den Eingriffsrippen 58 sind zwei weitere Rippen 60 ausgebildet, welche konvex geformt sind.

Fig. 7 verdeutlicht insbesondere die Ausgestaltung am Einsteckende 14, an dem an jeweils beiden, die zwei Reihen 24, 24' von Schlitzen 26 definierenden Umfangsbereichen 22, 22' zwei am Einsteckende 14 auslaufende erste Schlitzabschnitte 28 ausgebildet sind. Mittels der somit vier am Einsteckende 14 auslaufenden ersten Schlitzabschnitte 28 ist das Einsteckende 14 in vier Spreizschenkel 62, 62' unterteilt. Die jeweils einander gegenüberliegenden Spreizschenkel 62 bzw. 62' sind jeweils identisch bzw. ähnlich ausgeführt, wohingegen benachbarte Spreizschenkel 62, 62' verschieden groß ausgebildet bzw. ausgeführt sind.

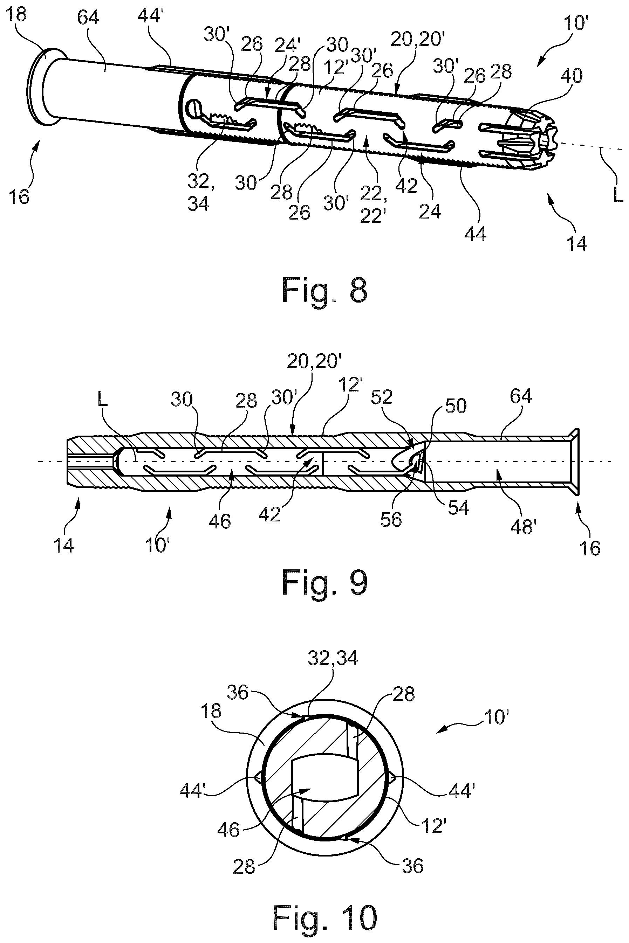

Fig. 8 zeigt einen insbesondere aus Kunststoff und als Fassadendübel ausgebildeten Spreizdübel 10' für Voll- und Hohlbaustoffe, der einen Dübelkörper 12' mit einer Längsachse L aufweist. Der Dübelkörper 12 umfasst ein Einsteckende 14 und ein entgegengesetzt angeordnetes hinteres Ende 16. Das Einsteckende 14 ist in der vorliegenden Ausführung keilförmig ausgebildet. Am hinteren Ende 16 ist ein Dübelflansch 18 angeordnet bzw. ausgebildet.

Der Dübelkörper 12' weist, wie in Fig. 8 angedeutet, an seiner äußeren Umfangsfläche 20 ebenfalls eine strukturierte Oberfläche auf. In der vorliegend gezeigten Ausführung ist die äußere Umfangsfläche 20 im Wesentlichen gleichmäßig strukturiert bzw. weist der Dübelkörper 12 eine gleichmäßig gewellte äußere Oberfläche 20' auf. Die an der Oberfläche 20' ausgebildeten Strukturierungen können jedoch nahezu jede beliebige Form haben.

Wie Fig. 8 weiter zeigt, weist der Dübelkörper 12' entlang wenigstens eines sich in Richtung der Längsachse L erstreckenden Umfangsbereichs 22, 22' zwei benachbarte Reihen 24, 24' von Schlitzen 26 auf. Vorliegend weist jeder Schlitz 26 der zwei Reihen 24, 24' von Schlitzen einen ersten Schlitzabschnitt 28 auf, der sich im Wesentlichen in Längsrichtung des Dübelkörpers 12 erstreckt, in der vorliegenden Ausführung parallel zur Längsachse L verläuft. Ferner weisen eine Vielzahl von Schlitzen 26 an wenigstens einem Ende seines ersten Schlitzabschnitts 28 einen in Richtung der benachbarten Reihe 24, 24' unter einem Winkel im Bereich von etwa 10° bis 80° geneigt zur Längsachse verlaufenden zweiten Schlitzabschnitt 30, 30' auf.

Wie Fig. 8 und 9 verdeutlichen, weisen mehrere der Schlitze 26 der benachbarten Reihen 24, 24' an beiden Enden des ersten Schlitzabschnitts 28 zwei unter einem Winkel geneigt zur Längsachse L verlaufende zweite Schlitzabschnitte 30, 30' auf. Der Spreizdübel 10' ist nahezu identisch ausgebildet, wie der in den Figuren 1 bis 7 gezeigte Spreizdübel 10, weshalb auf die obigen Ausführungen zu dem Spreizdübel 10 verwiesen wird, um unnötige Wiederholungen zu vermeiden.

Fig. 9 zeigt einen Längsschnitt des Spreizdübel 10'. Der Spreizdübel 10' weist im Vergleich zum Spreizdübel 10 einen dem Spreizabschnitt 46 vorgelagerten schlitzfreien Schaftabschnitt 64 als Einführabschnitt 48' auf.

Fig. 10 zeigt den Spreizdübel 10' nach Fig. 8 im Querschnitt. Wie Fig.10 in Verbindung mit Fig. 9 zu entnehmen ist, weist der Spreizabschnitt 46 eine gegenüber dem Einführabschnitt 48' verringerte freie Querschnittsfläche auf. Der Spreizabschnitt 46 weist in der gezeigten Ausführung einen tonnenförmigen Querschnitt ohne Eingriffsrippen auf seiner Innenseite auf.

Gleiche Bauteile sind mit denselben Bezugszeichen versehen.

### Bezugszeichenliste:

- 10, 10': Spreizdübel
- 12, 12': Dübelkörper
- 14: Einsteckende
- 16: hinteres Ende
- 18: Dübelflansch
- 20: Umfangsfläche
- 20': Oberfläche
- 22, 22': Umfangsbereich
- 24, 24': Reihe
- 26: Schlitz
- 28: erster Schlitzabschnitt
- 30, 30': zweiter Schlitzabschnitt
- 32: Materialverdickung
- 34: Auflaufschräge
- 36: Anschlagfläche
- 38: Abgleitfläche
- 40: Vertiefung
- 42: Materialstreifen
- 44, 44': Materialsteg
- 46: Spreizabschnitt
- 48, 48': Einführabschnitt
- 50: Einschlagsicherung
- 52: Innenwandbereich
- 54: Gewindeteilstück
- 56: Materialdurchbruch
- 58: Eingriffsrippen
- 60: Rippen
- 62, 62: Spreizschenkel
- 64: Schaftabschnitt
- A: Abstand
- L: Längsachse
- I: Länge
- U: Umfangsrichtung
- α: Innenwinkel

## Patentansprüche

1. Spreizdübel (10, 10'), insbesondere aus Kunststoff, für Voll- und Hohlbaustoffe, aufweisend einen Dübelkörper (12, 12') mit einer Längsachse (L), der einen sich entlang eines Abschnitts seiner Längsachse (L) erstreckenden Spreizabschnitt (46) aufweist,
**dadurch gekennzeichnet, dass** der Dübelkörper (12, 12') entlang wenigstens eines sich in Richtung der Längsachse (L) erstreckenden Umfangsbereichs (22, 22') zwei benachbarte Reihen (24, 24') von Schlitzen (26) aufweist,
wobei jeder Schlitz (26) der zwei Reihen (24, 24') von Schlitzen einen ersten Schlitzabschnitt (28) aufweist, der sich im Wesentlichen in Längsrichtung des Dübelkörpers (12, 12') erstreckt, und
wobei eine Vielzahl von Schlitzen (26) an wenigstens einem Ende seines ersten Schlitzabschnitts (28) einen in Richtung der benachbarten Reihe (24, 24') unter einem Winkel im Bereich von etwa 10° bis 80° geneigt zur Längsachse (L) verlaufenden zweiten Schlitzabschnitt (30, 30') aufweist.

2. Spreizdübel (10, 10') nach Anspruch 1,
**dadurch gekennzeichnet, dass** mehrere Schlitze (26) der benachbarten Reihen (24, 24') an beiden Enden des ersten Schlitzabschnitts (28) zwei unter einem Winkel zur Längsachse (L) geneigt verlaufende zweite Schlitzabschnitte (30, 30') aufweisen.

3. Spreizdübel (10, 10') nach Anspruch 1 oder 2,
**dadurch gekennzeichnet, dass** mittels der in einem Winkel zur Längsachse (L) geneigt verlaufenden, zweiten Schlitzabschnitte (30, 30') zweier benachbarter Reihen (24, 24') von Schlitzen (26) eine ineinandergreifende Verzahnung ausgebildet ist.

4. Spreizdübel (10, 10') nach einem der Ansprüche 1 bis 3,
**dadurch gekennzeichnet, dass** zwei benachbarten Reihen (24, 24') von Schlitzen (26) auf jeweils zwei voneinander abgewandten Umfangsbereichen (22, 22') des Dübelkörpers (12, 12') angeordnet sind.

5. Spreizdübel (10, 10') nach einem der vorstehenden Ansprüche,
**dadurch gekennzeichnet, dass** der Dübelkörper (12, 12') ein vorderes Einsteckende (14) und ein entgegengesetzt angeordnetes hinteres Ende (16) aufweist, wobei vorzugsweise das Einsteckende (14) keilförmig ausgebildet und am hinteren Ende (16) ein Dübelflansch (18) vorgesehen ist.

6. Spreizdübel (10, 10') nach Anspruch 5,
**dadurch gekennzeichnet, dass** am Einsteckende (14) an jeweils beiden, die zwei Reihen (24, 24') von Schlitzen definierenden Umfangsbereichen (22, 22') zwei am Einsteckende (14) auslaufende erste Schlitzabschnitte (28) ausgebildet sind, welche vorzugsweise dazu eingerichtet sind, das Einsteckende (14) in vier Spreizschenkel (60, 60') zu unterteilen.

7. Spreizdübel (10, 10') nach Anspruch 5 oder 6,
**dadurch gekennzeichnet, dass** der Dübelkörper (12, 12') an seinem hinteren Ende (16) einen Einführabschnitt (48, 48') für ein mit dem Spreizdübel (10, 10') in Wirkverbindung bringbares Befestigungsmittel aufweist, wobei der Spreizabschnitt (26) sich vorzugsweise unmittelbar an den Einführabschnitt (48, 48') anschließt.

8. Spreizdübel (10, 10') nach Anspruch 7,
**dadurch gekennzeichnet, dass** der Einführabschnitt (48, 48') eine im Wesentlichen zylindrische Querschnittfläche aufweist, wobei am Einführabschnitt (48, 48') eine Einschlagsicherung (50) für ein mit dem Dübelkörper (12, 12') in Wirkverbindung bringbares Befestigungsmittel vorgesehen ist.

9. Spreizdübel (10, 10') nach Anspruch 8,
**dadurch gekennzeichnet, dass** die Einschlagsicherung (50) mittels mindestens zweier auf einander gegenüberliegenden Innenwandbereichen (52) angeordneter Gewindeteilstücke ausgebildet (54) ist.

10. Spreizdübel (10, 10') nach Anspruch 8 oder 9,
**dadurch gekennzeichnet, dass** der Dübelkörper (12, 12') im Bereich der an den Innenwandbereichen (52) vorgesehenen Einschlagsicherung (50) einen Materialdurchbruch (56) aufweist.

11. Spreizdübel (10, 10') nach einem der vorstehenden Ansprüche,
**dadurch gekennzeichnet, dass** der Spreizabschnitt (46) eine gegenüber dem Einführabschnitt (48, 48') verringerte, freie Querschnittsfläche aufweist, welche vorzugsweise H-förmig mit zwei etwa parallel zur Längsachse (L) verlaufenden Eingriffsrippen (58) ausgebildet ist.

12. Spreizdübel (10, 10') nach einem der vorstehenden Ansprüche,
**dadurch gekennzeichnet, dass** an der äußeren Umfangsfläche (20) des Dübelkörpers (12, 12') in mindestens einem der mit den Schlitzen (26) ausgerüsteten Umfangsbereiche (22, 22') benachbart zu dessen hinteren Ende (16) eine vorstehende Materialverdickung (32) vorgesehen ist.

13. Spreizdübel (10, 10') nach Anspruch 12,
**dadurch gekennzeichnet, dass** die Materialverdickung (32) als eine in Umfangsrichtung (U) sich allmählich in radialer Richtung (R) aufweitende Auflaufschräge (34) ausgebildet ist, wobei die Materialverdickung (32) an einem im Dübelkörper (12, 12') ausgebildeten Schlitz (26) endet.

14. Spreizdübel (10, 10') nach einem der vorstehenden Ansprüche,
**dadurch gekennzeichnet, dass** der Dübelkörper (12, 12') zwischen den zwei Umfangsbereichen (22, 22') mit ihren Reihen (24, 24') von Schlitzen (26) mindestens einen an seiner äußeren Umfangsfläche (20) vorstehenden Materialsteg (44, 44') aufweist, der vorzugsweise parallel zur Längsachse (L) verläuft.

15. Spreizdübel (10, 10') nach einem der vorstehenden Ansprüche,
**dadurch gekennzeichnet, dass** der Dübelkörper (12, 12') auf seiner äußeren Umfangsfläche (20) eine strukturierte Oberfläche (20') aufweist, insbesondere eine im Wesentlichen gleichmäßig strukturierte gewellte Oberfläche (20').
